# FASCICULE DE BREVET EUROPEEN

(11) **EP 1 067 309 B1**
(45) Date de publication et mention de la délivrance du brevet: **10.03.2004**
(21) Numéro de dépôt: 00401472.6
(22) Date de dépôt: 25.05.2000
(51) Int. Cl.: F16F 13/18

(54) **Support hydroélastique pour un groupe motopropulseur d'un véhicule automobile.**
Hydroelastisches Lager für die Antriebseinheit in einem Kraftfahrzeug
Hydroelastic support for the drive unit of an automotive vehicle

(30) Priorité: 08.07.1999 FR 9908878
(43) Date de publication de la demande: 10.01.2001
(73) Titulaire: Peugeot Citroen Automobiles SA, 92200 Neuilly sur Seine (FR)
(72) Inventeur: Mortier, Frédéric, 35380 Saint Peran (FR); Hercouet, Roland, 35310 Breal sous Montfort (FR)
(74) Mandataire: Lanceplaine, Jean-Claude

(56) Documents cités:
- EP-A- 0 380 760
- US-A- 4 492 366
- US-A- 4 690 389
- PATENT ABSTRACTS OF JAPAN vol. 008, no. 083 (M-290), 17 avril 1984 (1984-04-17) & JP 59 001829 A (TOYODA GOSEI KK), 7 janvier 1984 (1984-01-07)

## Description

La présente invention concerne un support hydroélastique destiné à être interposé entre un élément à suspendre et un élément à isoler par rapport à l'autre, notamment pour la suspension d'un groupe motopropulseur ou moteur dans une caisse d'un véhicule automobile.

Les supports hydroélastiques comportent généralement un corps formé par une masse en matériau élastomère reliant une armature supérieure et une armature inférieure fixées respectivement sur les deux éléments et une chambre de travail délimitée par ladite masse en matériau élastomère et par une cloison transversale.

De plus, ce type de support comporte une chambre d'expansion délimitée par la cloison transversale et par une membrane inférieure souple.

Ce genre de support hydroélastique limite les débattements du groupe motopropulseur suivant les directions longitudinale et verticale par l'intermédiaire de butées en matériau élastomère adhérisées sur l'armature supérieure et en appui sur la face interne d'un boîtier dans lequel est emmanchée l'armature inférieure.

Généralement, la chambre d'expansion est située au-dessous de la chambre de travail et est séparée de celle-ci par une cloison rigide dans laquelle est disposé un canal et éventuellement une membrane souple à débattement limité.

Les deux chambres sont remplies de liquide, comme par exemple de l'antigel et le canal entre ces chambres présente une longueur et une section telles, que la fréquence de résonance de la masse de liquide déplacée dans ce canal en interaction avec l'élasticité des parois des chambres de travail et d'expansion, est sensiblement égale à la fréquence de résonance du moteur sur sa suspension, ce qui conduit à une augmentation de l'amortissement du support à cette fréquence.

La membrane souple entre les deux chambres évite, de part son élasticité sous faible déformation, une rigidification du support due au confinement du liquide dans la chambre de travail, dans la gamme des fréquences moyennes et hautes où il n'y a plus de circulation de liquide entre les chambres.

En effet, la chambre d'expansion étant limitée par une membrane de très grande souplesse, les variations de volume dans la chambre de travail sont retransmises directement à la chambre d'expansion par la déformation de cette membrane.

Un tel type de support hydroélastique est complexe et a des dimensions importantes compte tenu de sa configuration et son coût de fabrication est élevé du fait du nombre important de pièces le composant.

L'invention a pour but d'éviter ces inconvénients en proposant un support hydroélastique compact et qui assure efficacement les différentes fonctions notamment de support du groupe motopropulseur, de filtrage de vibrations et de limitation des débattements.

L'invention a donc pour objet un support hydroélastique destiné à être interposé entre un élément à suspendre et un élément à isoler par rapport à l'autre, notamment pour la suspension d'un groupe motopropulseur dans une caisse d'un véhicule automobile, du type comprenant :
- un corps formé par une masse en matériau élastomère reliant une armature supérieure et une armature inférieure, ladite armature supérieure étant reliée à l'élément à suspendre et s'étendant perpendiculairement à l'axe principal du support,
- un boîtier relié à l'élément à isoler et monté sur l'armature inférieure du corps et coiffant ce corps, ledit boîtier comportant sur deux faces opposées, une ouverture au niveau de chacune desquelles débouche une extrémité de l'armature supérieure,
- des organes de butée ménagés sur la masse en matériau élastomère du corps et coopérant avec les parois du boîtier pour assurer la reprise des efforts,
- et une chambre de travail et une chambre d'expansion reliées entre elles et remplies de liquide,
caractérisé en ce que la chambre de travail est disposée au-dessous du corps en matériau élastomère et est délimitée, en partie haute, par ledit corps et, en partie basse, par une cloison transversale rigide fixée au-dessous du boîtier et la chambre d'expansion est disposée au-dessus du boîtier et est délimitée, en partie basse, par ledit boîtier et, en partie haute, par une membrane souple fixée sur ce boîtier, lesdites chambres étant reliées entre elles par un passage de communication ménagé dans le boîtier.

Selon d'autres caractéristiques de l'invention :
- le passage de communication est formé par un canal dont la longueur et la section sont ajustées pour obtenir, par circulation alternée du fluide entre lesdites chambres, un amortissement maximal à une fréquence déterminée,
- le corps en matériau élastomère comporte, à sa partie inférieure, un prolongement latéral formant une membrane de découplage hydraulique disposée dans une ouverture ménagée dans l'armature inférieure, la face inférieure de ladite membrane étant en contact avec le liquide de la chambre de travail et la face supérieure étant au contact de l'atmosphère,
- la membrane comporte une partie périphérique mince et une partie centrale plus épaisse que ladite partie périphérique,
- les débattements de la membrane sont limités d'un côté par au moins un appui ponctuel réalisé sur la cloison transversale et de l'autre côté par au moins un appui ponctuel réalisé sur le boîtier.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'un support hydroélastique conforme à l'invention,
- la Fig. 2 est une vue schématique en coupe transversale du support hydroélastique conforme à l'invention,
- la Fig. 3 est une vue schématique en coupe transversale de détail montrant à plus grande échelle la membrane de découplage hydraulique du support hydroélastique conforme à l'invention,
- la Fig. 4 est une vue schématique en perspective de l'armature inférieure du corps en matériau élastomère,
- la Fig. 5 est une vue schématique en perspective du corps en matériau élastomère du support hydroélastique conforme à l'invention.

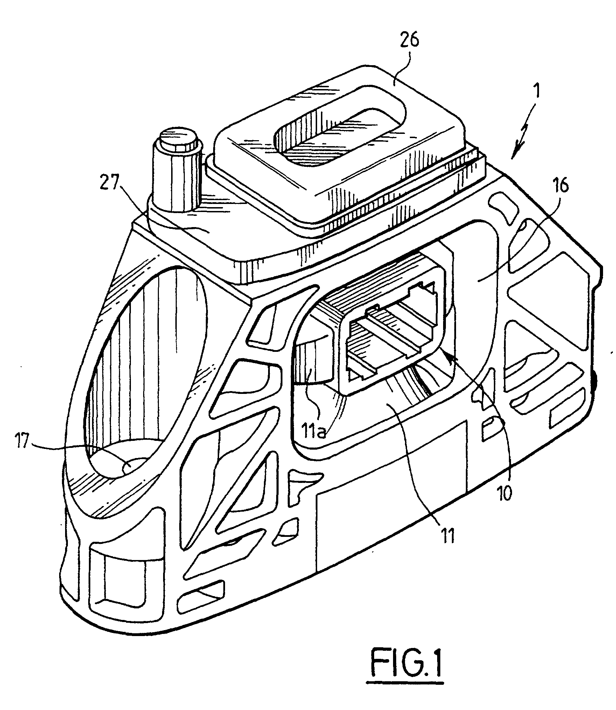

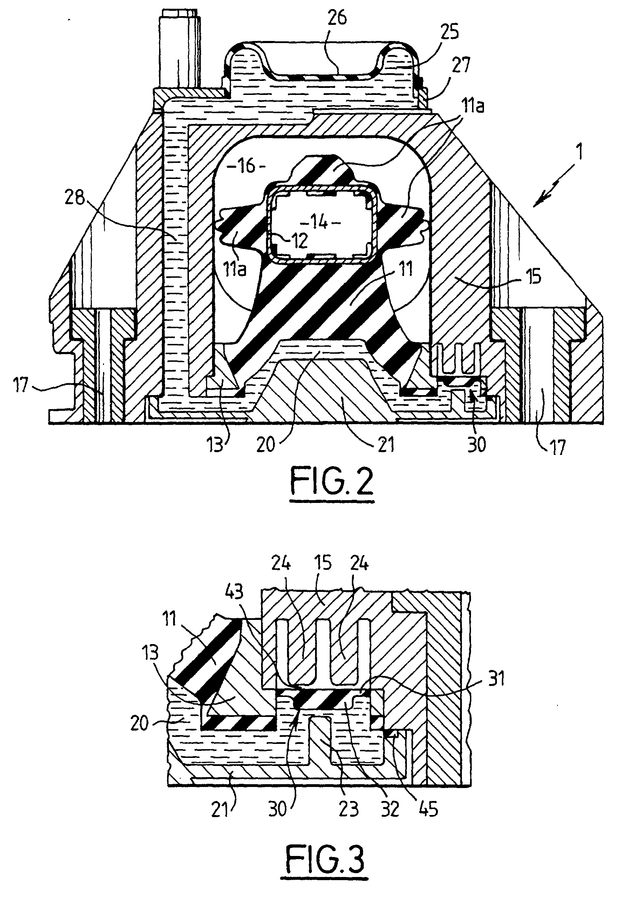

Le support hydroélastique représenté sur les Figs. 1 et 2 est adapté pour être interposé entre un élément à suspendre et un élément à isoler par rapport à l'autre et plus particulièrement pour être interposé entre un groupe motopropulseur et le reste de la structure ou châssis d'un véhicule automobile.

Ce support hydroélastique a pour but de limiter les débattements du groupe motopropulseur suivant les directions longitudinale et verticale.

Le support hydroélastique désigné dans son ensemble par la référence 1 comprend un corps 10 formé par une masse 11 en matériau élastomère qui relie, d'une part, une armature supérieure 12 et, d'autre part, une armature inférieure 13.

L'armature supérieure 12 est dans l'exemple de réalisation représenté sur les figures, formée par un organe tubulaire s'étendant perpendiculairement à l'axe principal du support et comportant un perçage axial 14 pour le passage d'un organe de liaison, non représenté, avec l'élément à supporter, comme par exemple le groupe motopropulseur du véhicule automobile. L'armature supérieure 12 de forme tubulaire a de préférence une section parallélépipèdique.

Selon une variante, l'armature supérieure 12 du corps 10 peut être également constituée par un élément plein lié directement à l'élément à suspendre.

Le corps 10 est réalisé par surmoulage et adhérisation de l'élastomère sur les armatures 12 et 13.

Le support hydroélastique 1 comprend également un boîtier 15 qui est monté sur l'armature inférieure 13 et qui coiffe le corps 10 en matériau élastomère.

Ainsi que représenté à la Fig. 1, le boîtier 15 comporte, sur deux faces opposées, une ouverture 16 au niveau de chacune desquelles débouche une extrémité de l'armature supérieure 12 pour permettre la fixation de cette armature supérieure 12 avec l'élément à suspendre, comme par exemple le groupe motopropulseur.

Le boîtier 15 est relié à l'élément à isoler, comme par exemple la structure ou le châssis de ce véhicule.

A cet effet, le boîtier 15 comporte, sur chacun de ses bords latéraux, deux orifices 17 pour le passage d'un organe de fixation, non représenté, sur l'élément correspondant à isoler.

Comme représenté à la Fig. 2, la masse 11 en matériau élastomère du corps 10 comporte des organes de butée 11a coopérant avec les parois du boîtier 15 pour assurer la reprise des efforts dans toutes les directions de sollicitation du support, c'est à dire pour assurer le filtrage sous charge ou couple moteur, limiter les débattements en attaque et en détente et reprendre les efforts en accélération et au freinage.

Le support hydroélastique 1 comporte également une chambre de travail 20 disposée au-dessous du corps 10 en matériau élastomère et délimitée, d'une part, en partie haute, par ce corps 10 et, d'autre part, en partie basse, par une cloison transversale rigide 21 fixée au-dessous du boîtier 15.

De plus, le support hydroélastique 1 comporte une chambre d'expansion 25 disposée au-dessus du boîtier 15 et délimitée, d'une part, en partie basse, par ce boîtier 15 et, d'autre part, en partie haute, par une membrane souple 26 fixée sur ledit boîtier 15.

Le bord périphérique de la membrane 26 est adhérisé à une armature rigide 27 qui assure la liaison avec le boîtier 15.

Les chambres 20 et 25 sont reliées entre elles par un passage de communication 28, comme par exemple un canal ménagé dans le boîtier 15 et s'étendant sur toute la hauteur de ce boîtier 15.

Le passage de communication 28 peut être de différentes longueurs pour présenter un cheminement permettant d'amortir les sollicitations dans des plages de fréquences désirées.

Enfin, les chambres 20 et 25 sont remplies de liquide, comme par exemple de l'antigel, et communiquent entre elles par le passage 28.

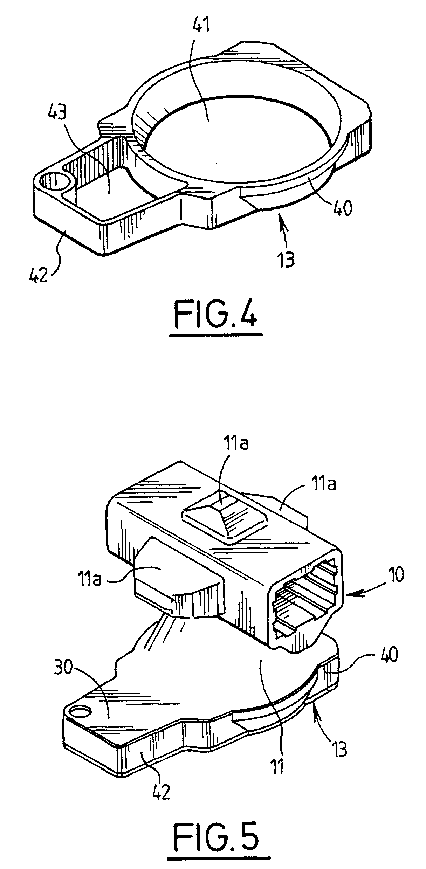

Ainsi que représenté à la Fig. 4, l'armature inférieure 13 se compose d'une base 40 percée d'un orifice central 41 à l'intérieur duquel est adhérisée la partie inférieure de la masse 11 en matériau élastomère du corps 10.

De plus, l'armature inférieure 13 est munie, sur l'un de ses bords latéraux, d'une moulure annulaire 42 horizontale et qui détermine une ouverture 43 présentant une section de forme quelconque, comme par exemple circulaire ou rectangulaire.

Ainsi que représenté sur la Fig. 5, le corps 10 en matériau élastomère comporte, à sa partie inférieure, un prolongement latéral formant une membrane 30 de découplage hydraulique.

Cette membrane 30 est disposée sur l'ouverture 43 ménagée dans l'armature inférieure 13 et le bord périphérique de ladite membrane 30 est adhérisé sur la moulure annulaire 42.

La partie périphérique 31 de la membrane 30 est mince et sa partie centrale 32 est plus épaisse ce qui assure la rigidité de cette membrane 30. Cette variation d'épaisseur permet un éventuel réglage de la rigidité de ladite membrane.

La face inférieure de la membrane 30 est en contact avec le liquide de la chambre de travail 20 et la face supérieure de ladite membrane 30 est au contact de l'atmosphère.

Les débattements de la membrane 30 sont limités, d'un côté, par au moins un appui ponctuel 23 réalisé sur la cloison transversale 21 et, de l'autre côté, par au moins un appui ponctuel 24 réalisé sur le boîtier 15. Le jeu entre la partie centrale 32 de la membrane 30 et les appuis ponctuels, respectivement 23 et 24, détermine la valeur maximale des excitations du groupe motopropulseur selon l'axe du support hydroélastique 1 pour lesquelles le déconfinement de la chambre de travail 20 est réalisé. le jeu entre la membrane 30 et son ou ses appuis est à régler en fonction de l'amplitude vibratoire de l'élément à suspendre.

Par ailleurs, la longueur et la section du canal 28 sont ajustées pour obtenir, par circulation alternée du fluide entre les chambres 20 et 25, un amortissement maximal à une fréquence déterminée.

Comme représenté à la Fig. 3, une pellicule 45 en matériau élastomère est adhérisée sur le bord supérieur de la cloison 21 pour assurer l'étanchéité entre cette cloison et le boîtier 15.

L'assemblage entre le boîtier 15, l'armature inférieure 13, la cloison transversale 21 et l'armature 27 est réalisé par tout moyen approprié selon la nature du matériau composant ces éléments et cet assemblage peut être réalisé par exemple par collage, soudage, sertissage, rivetage ou vissage.

Du fait de la disposition de la chambre d'expansion 25 au-dessus du boîtier 15, le fonctionnement de la membrane 30 formant le clapet de découplage hydraulique est donc indépendant de l'élasticité de la membrane 26 délimitant la chambre d'expansion 25 ce qui permet d'optimiser le fonctionnement de ce clapet de découplage hydraulique.

Le moulage du corps 10, des butées 11a et de la membrane 30 est réalisé en une seule opération permettant ainsi de diminuer le nombre de pièces composant le support hydroélastique. Le boîtier 15, les armatures 12 et 13 et la cloison transversale 21 peuvent être réalisés en alliage léger ou en une matière thermoplastique pour diminuer le poids du support hydroélastique.

Enfin, le support hydroélastique selon l'invention présente l'avantage d'être compact ce qui permet de diminuer l'entraxe entre les points de fixation sur la caisse du véhicule et sur le groupe motopropulseur et ainsi, en abaissant le centre élastique du support, de faciliter le découplage des modes de suspension de ce groupe motopropulseur.

## Revendications

1. Support hydroélastique destiné à être interposé entre un élément à suspendre et un élément à isoler par rapport à l'autre, notamment pour la suspension d'un groupe motopropulseur dans une caisse d'un véhicule automobile, du type comprenant :
- un corps (10) formé par une masse (11) en matériau élastomère reliant une armature supérieure (12) et une armature inférieure (13), ladite armature supérieure (12) étant reliée à l'élément à suspendre et s'étendant perpendiculairement à l'axe principal du support,
- un boîtier (15) relié à l'élément à isoler et monté sur l'armature inférieure (13) et coiffant le corps (10), ledit boîtier (15) comportant, sur deux faces opposées, une ouverture (16) au niveau de chacune desquelles débouche une extrémité de l'armature supérieure (12),
- des organes (11a) de butée ménagés sur la masse (11) en matériau élastomère du corps (10) et coopérant avec les parois du boîtier (15) pour assurer la reprise des efforts,
- et une chambre de travail (20) et une chambre d'expansion (25) reliées entre elles et remplies de liquide, **caractérisé en ce que** la chambre de travail (20) est disposée au-dessous du corps (10) en matériau élastomère et est délimitée, en partie haute, par ledit corps (10) et, en partie basse, par une cloison transversale rigide (21) fixée au-dessous du boîtier (15) et la chambre d'expansion (25) est disposée au-dessus du boîtier (15) et est délimitée, en partie basse, par ledit boîtier (15) et, en partie haute, par une membrane (26) souple fixée sur ce boîtier (15), lesdites chambres (20 ; 25) étant reliées entre elles par un passage de communication (28) ménagé dans le boîtier (15).

2. Support hydroélastique selon la revendication 1, **caractérisé en ce que** le passage de communication est formé par un canal (28) dont la longueur et la section sont ajustées pour obtenir, par circulation alternée du liquide entre lesdites chambres (20 ; 25), un amortissement maximal à une fréquence déterminée.

3. Support hydroélastique selon la revendication 1, **caractérisé en ce que** le corps (10) en matériau élastomère comporte, à sa partie inférieure, un prolongement latéral formant une membrane (30) de découplage hydraulique disposée dans une ouverture (43) ménagée dans l'armature inférieure (13), la face inférieure de ladite membrane (30) étant en contact avec le liquide de la chambre de travail (20) et la face supérieure étant au contact de l'atmosphère.

4. Support hydroélastique selon la revendication 3, **caractérisé en ce que** la membrane (30) comporte une partie périphérique (31) mince et une partie centrale (32) plus épaisse que ladite partie périphérique (31).

5. Support hydroélastique selon la revendication 3 ou 4, **caractérisé en ce que** les débattements de la membrane (30) sont limités d'un côté par au moins un appui ponctuel (23) réalisé sur la cloison transversale (21) et de l'autre côté par au moins un appui ponctuel (24) réalisé sur le boîtier (15).

## Patentansprüche

1. Hydroelastisches Lager, das dazu bestimmt ist, zwischen einem ein- bzw. aufzuhängenden Element und einem gegenüber dem anderen Element zu isolierenden Element untergebracht zu werden, insbesondere für die Auf- bzw. Einhängung eines Antriebsaggregats in einer Karosserie eines Kraftfahrzeugs, von der Art, die Folgendes umfasst:
- einen Körper (10), der aus einer Masse (11) aus Elastomermaterial gebildet ist, der einen oberen Beschlag (12) mit einem unteren Beschlag (13) verbindet, wobei der obere Beschlag (12) mit dem aufzuhängenden Element verbunden ist und sich senkrecht zur Hauptachse des Lagers erstreckt,
- ein Gehäuse (15), das mit dem zu isolierenden Element verbunden, an dem unteren Beschlag (13) angebracht ist und den Körper (10) bedeckt, wobei das Gehäuse (15) an zwei entgegengesetzten Seiten eine Öffnung (16) umfasst, auf deren Höhe jede von diesen ein Ende des oberen Beschlags (12) enthält,
- Anschlageinrichtungen (11a), die auf der Masse (11) aus Elastomermaterial des Körpers (10) angeordnet sind und mit den Wänden des Gehäuses (15) zusammenwirken, um die Kräfteaufnahme sicherzustellen,
- und eine Arbeitskammer (20) und eine Ausdehnungskammer (25), die miteinander verbunden und mit Flüssigkeit gefüllt sind,
**dadurch gekennzeichnet, dass**
die Arbeitskammer (20) unter dem Körper (10) aus Elastomermaterial angeordnet und im oberen Teil durch den Körper (10) und im unteren Teil durch eine starre, quer angeordnete Zwischenwand (21) begrenzt ist, die unter dem Gehäuse (15) befestigt ist, und die Ausdehnungskammer (25) über dem Gehäuse (15) angeordnet und im unteren Teil durch das Gehäuse (15) und im oberen Teil durch eine nachgiebige Membran (26) begrenzt ist, die am Gehäuse (15) befestigt ist, wobei die Kammern (20; 25) durch einen Verbindungsdurchgang (28) miteinander verbunden sind, der in dem Gehäuse (15) ausgebildet ist.

2. Hydroelastisches Lager nach Anspruch 1,
**dadurch gekennzeichnet, dass**
der Verbindungsdurchgang durch einen Kanal (28) gebildet ist, dessen Länge und Querschnitt so eingestellt sind, dass durch die hin/zurück wechselnde Zirkulation der Flüssigkeit zwischen den Kammern (20; 25) bei einer bestimmten Frequenz eine maximale Dämpfung erhalten wird.

3. Hydroelastisches Lager nach Anspruch 1,
**dadurch gekennzeichnet, dass**
der Körper (10) aus Elastomermaterial an seinem unteren Teil eine seitliche Verlängerung umfasst, die eine Membran (30) zur hydraulischen Entkopplung bildet, die in einer in dem unteren Beschlag (13) vorgesehenen Öffnung (43) angeordnet ist, wobei die Unterseite der Membran (30) mit der Flüssigkeit der Arbeitskammer (20) und die Oberseite mit der Atmosphäre in Kontakt ist.

4. Hydroelastisches Lager nach Anspruch 3,
**dadurch gekennzeichnet, dass**
die Membran (30) einen kleinen bzw. dünnen Umfangsabschnitt (31) und einen Zentralabschnitt (32) umfasst, der größer bzw. dicker ist als der Umfangsabschnitt (31).

5. Hydroelastisches Lager nach Anspruch 3 oder 4,
**dadurch gekennzeichnet, dass**
der Spielraum der Membran (30) auf der einen Seite durch mindestens eine Punktabstützung (23) begrenzt ist, die an der quer angeordneten Zwischenwand (21) ausgebildet ist, und auf der anderen Seite durch mindestens eine Punktabstützung (24), die am Gehäuse (15) ausgebildet ist.

## Claims

1. A hydro-elastic mount adapted to be disposed between a member to be suspended and a member to be isolated from the other member, in particular for suspending an engine or engine/transmission unit in an automobile vehicle body, which mount is of the type comprising:
- a body (10) formed by a mass (11) of elastomer material connecting an upper fixture (12) and a lower fixture (13), said upper fixture (12) being adapted to be connected to the member to be suspended and perpendicular to the main axis of the mount,
- a box member (15) adapted to be connected to the member to be isolated, mounted on the lower fixture (13), capping the body (10), and comprising, on each of two opposite faces, an opening (16) into which opens one end of the upper fixture (12),
- stops (11a) formed on the elastomer material mass (11) of the body (10) and co-operating with the walls of the box member (15) to absorb forces, and
- a working chamber (20) and an expansion chamber (25) connected to each other and filled with liquid, which mount is **characterised in that** the working chamber (20) is under the elastomer material body (10) and is delimited in its upper portion by said body (10) and in its lower portion by a rigid transverse partition (21) fixed under the box member (15), and the expansion chamber (25) is above the box member (15) and is delimited in its lower portion by said box member (15) and in its upper portion by a flexible membrane (26) fixed to said box member (15), said chambers (20; 25) being interconnected by a communication passage (28) formed in the box member (15).

2. A hydro-elastic mount according to claim 1, **characterised in that** the length and section of the communication passage (28) are adjusted to obtain maximum damping at a particular frequency by alternate circulation of the liquid between said chambers (20; 25).

3. A hydro-elastic mount according to claim 1, **characterised in that** the upper portion of the elastomer material body (10) comprises a lateral extension forming a hydraulic decoupling membrane (30) disposed in an opening (43) formed in the lower fixture (13), the lower face of said membrane (30) being in contact with the liquid in the working chamber (20) and the upper face being in contact with the atmosphere.

4. A hydro-elastic mount according to claim 3, **characterised in that** the membrane (30) comprises a thin peripheral portion (31) and a central portion (32) thicker than said peripheral portion (31).

5. A hydro-elastic mount according to claim 3 or claim 4, **characterised in that** the movements of the membrane (30) are delimited by at least one point of contact (23) on the transverse partition (21) and by at least one point of contact (24) on the box member (15).
